# EUROPÄISCHE PATENTSCHRIFT

(11) **EP 2 912 328 B1**
(45) Veröffentlichungstag und Bekanntmachung des Hinweises auf die Patenterteilung: **27.02.2019**
(21) Anmeldenummer: 13783047.7
(22) Anmeldetag: 24.10.2013
(51) Int. Cl.: F16D 3/223

(54) **LEICHTBAUGELENK FÜR DIE ÜBERTRAGUNG VON DREHBEWEGUNGEN**
LIGHTWEIGHT JOINT FOR TRANSMITTING ROTATIONAL MOVEMENTS
JOINT ARTICULÉ ALLÉGÉ ASSURANT LA TRANSMISSION DE MOUVEMENTS DE ROTATION

(30) Priorität: 26.10.2012 DE 102012110276
(43) Veröffentlichungstag der Anmeldung: 02.09.2015
(73) Patentinhaber: ThyssenKrupp Steel Europe AG, 47166 Duisburg (DE)
(72) Erfinder: GÖVERT, Michael, 40789 Monheim (DE)
(74) Vertreter: thyssenkrupp Intellectual Property GmbH
(86) Internationale Anmeldenummer: PCT/EP2013/072311
(87) Internationale Veröffentlichungsnummer: WO 2014/064214

(56) Entgegenhaltungen:
- DE-B- 1 004 014
- FR-A- 622 859
- FR-A- 1 410 608
- FR-A1- 2 316 475
- FR-E- 50 320

## Beschreibung

Die Erfindung betrifft ein Verbindungsgelenk zur Übertragung einer Drehbewegung von einer ersten auf eine zweite drehenden Welle mit einem Gelenkaußenteil, einem Gelenkmittelteil und einem Gelenkinnenteil, wobei das Gelenkaußenteil mit der ersten drehenden Welle und das Gelenkinnenteil mit der zweiten drehenden Welle zur Übertragung der Drehbewegung verbunden sind und Kugeln in Kugelbahnen vorgesehen sind, welche in den Kugelbahnen ihre Position relativ zum Gelenkaußen-, Gelenkmittel- und Gelenkinnenteil ändern können.

Gleichlauf-, Tripode- und auch Kreuzgelenke werden verwendet, um nicht parallel verlaufende Drehachsen miteinander formschlüssig zu verbinden, so dass die Drehbewegung von einer Achse auf die andere übertragen werden kann. Diese bestehen üblicherweise aus einem Gelenkaußenteil, einem Gelenkmittelteil und einem Gelenkinnenteil, wobei Kugeln in Kugelbahnen vorgesehen sein können, welche einerseits zur formschlüssigen Übertragung der Drehbewegung beispielsweise vom Gelenkaußenteil auf das Gelenkmittelteil und weiter auf das Gelenkinnenteil gewährleisten und andererseits es ermöglichen, dass die Kugeln ihre Position relativ zum Gelenkaußen-, Gelenkmittel- oder Gelenkinnenteil während der Drehbewegung ändern können. Aus dem Stand der Technik beispielsweise aus der britischen Patentschrift GB 390 438 ist ein Kugelkreuzgelenk bekannt, bei welchem ein kugelkopfförmiges Gelenkinnenteil über Kugeln in einer Kugelbahn mit einem Gelenkmittelteil und ebenfalls kugelförmig ausgebildeten Gelenkaußenteil verbunden sind. Die Kugelbahnen werden hier durch Einsätze realisiert, welche im Gelenkinnenteil, im Gelenkmittelteil und im Gelenkaußenteil vorgesehen sind. Einerseits ist der Aufbau des aus dem Stand der Technik bekannten Verbindungsgelenks komplex und erfordert viele Bearbeitungsschritte, um die notwendigen Einsätze und Ausfräsungen in den jeweiligen Teilen des Gelenks vorzusehen. Andererseits weist das bekannte Verbindungsgelenk den Nachteil auf, dass der erlaubte Beugewinkel zwischen Gelenkinnenteil und Gelenkaußenteil relativ gering ist. Darüber hinaus ist auch das Gewicht des aus dem Stand der Technik bekannten Verbindungsgelenks verbesserungswürdig. Schließlich ist aufgrund der Überbestimmung des bekannten Verbindungsgelenks das Spiel zwischen Gelenkinnenteil und Gelenkaußenteil ebenfalls verbesserungswürdig.

Hiervon ausgehend liegt der vorliegenden Erfindung die Aufgabe zugrunde, ein Verbindungsgelenk zur Übertragung von Drehbewegungen zur Verfügung zu stellen, welches einerseits einfacher aufgebaut ist, leichter herzustellen ist und darüber hinaus weniger Spiel bei insgesamt weniger Reibung aufweist.

Gemäß einer ersten Lehre der vorliegenden Erfindung wird die oben aufgezeigte Aufgabe durch ein gattungsgemäßes Verbindungsgelenk dadurch gelöst, dass das Gelenkaußenteil über Kugeln in mindestens einer ersten und einer zweiten Kugelbahn, welche zwischen Gelenkaußenteil und Gelenkmittelteil vorgesehen sind, gegenüber dem Gelenkmittelteil um eine erste Schwenkachse schwenkbar gelagert ist, das Gelenkinnenteil gegenüber dem Gelenkmittelteil über Kugeln in einer dritten und vierten Kugelbahn, welche zwischen dem Gelenkinnenteil und dem Gelenkmittelteil vorgesehen sind, um eine zweite Schwenkachse schwenkbar gelagert ist, die ersten und zweite Schwenkachse einen Winkel von 90° zueinander einnehmen und Kugeln in den Kugelbahnen vorgesehen sind, so dass die Drehbewegung über die Kugeln in der Kugelbahnen vom Gelenkaußenteil über das Gelenkmittelteil auf das Gelenkinnenteil und umgekehrt übertragbar ist.

Anders als im Stand der Technik ist das Gelenkaußenteil über eine erste Schwenkachse gegenüber dem Gelenkmittelteil und das Gelenkinnenteil über eine zu der ersten Schwenkachse um 90° verdrehten zweiten Schwenkachse gegenüber dem Gelenkmittelteil schwenkbar gelagert. Die Bereitstellung der beiden Schwenkachsen durch Kugelbahnen und der darin angeordneten Kugeln ermöglicht es, dass Verbindungsgelenk gegenüber dem im Stand der Technik bekannten Verbindungsgelenk deutlich einfacher, nämlich mit nur insgesamt vier Kugelbahnen, aufzubauen und insbesondere das Schwenken sowie die Drehbewegung mit deutlich geringerem Reibungswerten zu gewährleisten. Die Anordnung der Schwenkachsen in einem 90° Winkel erlaubt eine maximale Bewegungsfreiheit der beiden drehenden Wellen, zwischen welchen die Drehbewegung übertragen werden soll.

Gemäß einer ersten Ausgestaltung der vorliegenden Erfindung sind je Kugelbahn mindestens zwei Kugeln vorgesehen. Im Gegensatz zu der Verwendung von einer Kugel je Kugelbahn sind die Führungseigenschaften und das Spiel des Verbindungsgelenks verbessert. Gegenüber einer Verwendung von drei Kugeln je Kugelbahn, wie es aus dem Stand der Technik bekannt ist, erlaubt die Verwendung von zwei Kugeln je Kugelbahn bei gleicher Lauflänge der Kugelbahnen eine größere Bewegungsfreiheit der Gelenkteile gegeneinander.

Gemäß einer weiteren Ausgestaltung des erfindungsgemäßen Verbindungsgelenks sind die Kugelbahnen derart ausgebildet, dass das Gelenkaußenteil und/oder das Gelenkinnenteil um mindestens einen Winkel von 40° in jede Schwenkrichtung um die erste respektive um die zweite Schwenkachse schwenkbar ist. Hierdurch kann ein sehr großer Beugewinkel des Verbindungsgelenks zur Verfügung gestellt werden.

Gemäß einer weiteren Ausgestaltung kann das Verbindungsgelenk auf einfache Weise dadurch bereitgestellt werden, dass das Gelenkaußenteil Bereiche mit erhöhtem Außendurchmesser und das Gelenkmittelteil zugehörige Bereiche mit verringertem Außendurchmesser zur Aufnahme der Kugeln der ersten und zweiten Kugelbahn aufweisen und das Gelenkmittelteil Bereiche mit erhöhtem Außendurchmesser und das Gelenkinnenteil Bereiche mit verringertem Außendurchmesser zur Aufnahme der Kugeln der dritten und vierten Kugelbahn aufweisen. Durch diese Maßnahme werden sowohl durch das Gelenkaußenteil als auch durch das Gelenkmittelteil und das Gelenkinnenteil die Kugelbahnen unmittelbar bereitgestellt, so dass die Verwendung von Einsätzen oder auch Kugelkäfigen entfällt. Selbstverständlich ist auch denkbar, Kugelkäfige für die Kugeln der Kugelbahnen zu verwenden. Diese können dann aber auf Minimalgröße reduziert werden, da die hauptsächliche Führung durch die Kugelbahnen des Gelenkaußen-, Gelenkmittel- bzw. des Gelenkinnenteils gewährleistet wird. Beispielsweise können dann Kugelkäfige ähnlich der, wie sie bei Kugellagern verwendet werden, eingesetzt werden.

Vorzugsweise weisen das Gelenkaußenteil, das Gelenkmittelteil und/oder das Gelenkinnenteil in den Bereichen mit vergrößertem oder verringertem Außendurchmesser mit den in den jeweiligen Kugelbahnen angeordneten Kugeln einen Kontaktwinkel von mehr als 45° auf. Hierdurch wird die Führung der Kugeln deutlich verbessert und damit das Spiel des Verbindungsgelenks trotz der Nichtverwendung von Kugelkäfigen deutlich reduziert.

Vorzugsweise weisen die Kugelbahnen einen elliptischen Querschnitt oder beispielsweise von gespiegelten Spitzbögen auf. Hierdurch kann die Lauffläche bzw. Kontaktlinie der Kugeln in den Kugelbahnen auf wenige Punkte beispielsweise zwei Kontaktpunkte reduziert und damit die Reibung insgesamt verringert werden.

Ist das Gelenkaußenteil, das Gelenkmittelteil und/oder das Gelenkinnenteil aus rotationssymmetrischen Ronden, Rohrabschnitten oder Fließpressrohlingen durch Umformen, vorzugsweise unter Anwendung eines Drückwalzens hergestellt, weisen die Bereiche, welche für die Kugelbahnen vorgesehen sind, typische Radien ohne spitze Kanten und Ecken auf, wie sie bei einer mechanischen Umformung in der Regel entstehen. Diese Radien führen dazu, dass die Flächenpressung der Kugeln unter Belastung besser aufgenommen werden kann. Spannungsspitzen am Auslauf der Kugelbahn werden reduziert bzw. vermieden Darüber hinaus können die Kugelbahnen auch einfach durch hoch integrierte Prozesse wie beispielsweise das Drückwalzen hergestellt werden, ohne dass eine spanende Bearbeitung eines massiven Rohlings notwendig wird. Spanende Bearbeitungen haben nämlich das Problem, dass scharfe Kanten und Überstände beseitigt bzw. gebogen werden müssen, um Spannungsspitzen zu verringern. Dies sind zusätzliche teure Arbeitsschritte. Eine Umformung erzeugt dagegen in der Regel eine glatte Oberfläche mit niedrigen Reibungswerten. Neben dem Drückwalzen kommen natürlich auch andere Verfahren zum mechanischen Umformen von rohrförmigen Rohlingen oder runden bzw. Fließpressrohlingen, beispielsweise Ziehen, Rollformen etc. in Frage.

Vorzugsweise sind das Gelenkaußenteil, das Gelenkmittelteil und/oder das Gelenkinnenteil nach dem Umformen teilweise oder vollständig vergütet. Einerseits können hierdurch Festigkeitswerte der verwendeten Gelenkaußenteile, Gelenkmittelteile und Gelenkinnenteile erreicht werden, welche eine höhere Kraftübertragung ermöglichen. Andererseits ergibt sich auch ein geringerer Verschleiß des Verbindungsgelenks.

Um die Führung des Verbindungsgelenks weiter zu verbessern, sind gemäß einer weiteren Ausgestaltung mindestens zwei der Kugelbahnen als jeweils zwei parallel verlaufende Kugelbahnen ausgebildet, so dass die Führungseigenschafen dieser doppelt parallel verlaufenden Kugelbahnen verbessert sind. Einerseits gelingt die Drehmomentsübertragung durch die parallel verlaufenden Kugelbahnen deutlich besser, andererseits steigt die Reibung durch die Verwendung der parallel verlaufenden Kugelbahnen nicht zu stark an, so dass insbesondere eine höhere Drehmomentübertragung für das Verbindungsgelenk gewährleistet wird. Insbesondere dann, wenn alle vier Kugelbahnen als jeweils parallel verlaufende Kugelbahnen ausgebildet sind.

Das Gelenkaußenteil als auch das Gelenkinnenteil kann einerseits einstückig mit der ersten oder der zweiten drehenden Welle ausgebildet sein. Andererseits ist gemäß einer vorteilhaften Ausgestaltung des Verbindungsgelenks an dem in Richtung der ersten drehenden Welle weisenden Ende des Gelenkaußenteils und/oder an dem in Richtung der zweiten drehenden Welle weisenden Ende des Gelenkinnenteils ein Gelenkzapfen vorgesehen, welcher optional Sicherungsmittel zur Verbindung mit der ersten respektive der zweiten drehenden Welle aufweist. Durch den Gelenkzapfen können die jeweiligen Gelenkteile, also Gelenkaußenteil oder Gelenkinnenteil mit der drehenden Welle derart formschlüssig verbunden werden, dass einerseits ein ungewolltes Lösen des Verbindungsgelenks von der drehenden Welle vermieden werden kann. Andererseits kann der Gelenkzapfen beispielsweise eine Verzahnung aufweisen, um eine sehr gute Drehmomentsübertragung auf die drehende Welle zu gewährleisten.

Im Weiteren soll die Erfindung anhand von Ausführungsbeispielen in Verbindung mit der Zeichnung näher erläutert werden. In der Zeichnung zeigt
- Fig. 1: in einer Radialschnittansicht ein erstes Ausführungsbeispiel eines Verbindungsgelenks,
- Fig. 2: in einer schematischen Schnittansicht das Ausführungsbeispiel aus Fig. 1 entlang der Schnittlinie II,
- Fig. 3: das Ausführungsbeispiel aus Fig. 1 in einer schematischen Schnittansicht entlang der Schnittlinie III,
- Fig. 4: in einer schematischen Radialschnittansicht ein zweites Ausführungsbeispiel einer Verbindungsgelenks mit jeweils mit zwei parallel verlaufenden Kugelbahnen und
- Fig. 5a), b): zwei Ausführungsbeispielen von unterschiedlichen Querschnittsformen der Kugelbahnen.

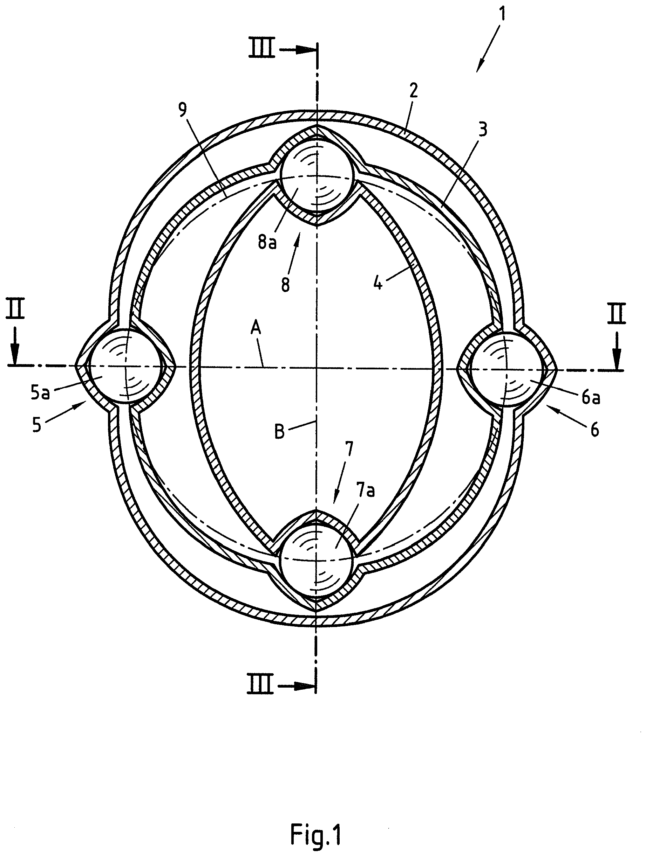

In Fig. 1 ist zunächst in einer schematischen radialen Schnittansicht ein erstes Ausführungsbeispiel eines erfindungsgemäßen Verbindungsgelenks 1 dargestellt. Das Verbindungsgelenk 1 weist ein Gelenkaußenteil 2, ein Gelenkmittelteil 3 sowie ein Gelenkinnenteil 4 auf. Das Gelenkaußenteil 2 ist über eine erste und eine zweite Kugelbahn 5, 6 gegenüber dem Gelenkmittelteil 3 schwenkbar um die Achse A gelagert. Das Gelenkinnenteil 4 ist darüber hinaus über die dritte und vierte Kugelbahn 7, 8 an dem Gelenkmittelteil 3 derart gelagert, dass das Gelenkinnenteil 4 um die Schwenkachse B gegenüber dem Gelenkmittelteil verschwenkt werden kann. Beide Schwenkachsen A und B nehmen einen Winkel von 90° zueinander ein. Wie in der Fig. 1 zu erkennen ist, werden bei dem in Fig. 1 dargestellten Ausführungsbeispiel des Verbindungsgelenks insgesamt nur vier Kugelbahnen 5, 6, 7, 8 benötigt, um einerseits die Drehbewegung der ersten drehenden Welle auf die zweite drehende Welle zu übertragen und andererseits gleichzeitig einen Beugewinkel durch Verschwenken gegenüber der Achse A und B zu ermöglichen.

Wie in dem in Fig. 1 dargestellten Ausführungsbeispiel ebenfalls zu erkennen ist, ist das Verbindungsgelenk 1 aus blechartigem Werkstoff und keinem Vollmaterial hergestellt. Es ist daher im Vergleich zu dem aus dem Stand der Technik bekannten, zumeist Vollmaterial oder nahezu Vollmaterial aufweisenden Verbindungsgelenken besonders leicht. Als Vormaterialien werden vorzugsweise Ronden, Rohrabschnitte oder Fließpressrohlinge verwendet, die mechanisch, beispielsweise durch Drückwalzen oder Rollformen, umgeformt werden.

Das Gelenkaußenteil, Gelenkmittelteil und Gelenkinnenteil wird vorzugsweise aus Fliespressrohlingen, Ronden oder rohrförmigen Hohlkörpern durch mechanisches Umformen, beispielsweise Drückwalzen hergestellt. Bei dem Drückwalzen handelt es sich um ein bevorzugtes Herstellverfahren, mit welchem insbesondere auch unterschiedliche Wanddicken in den unterschiedlichen Bereichen ohne Probleme realisiert werden können. Das erfindungsgemäße Verbindungsgelenk 1 kommt dabei ohne zusätzliche Maßnahmen im Bereich der Kugelbahnen aus, das bedeutet, es werden grundsätzlich keine Kugelkäfige für die Realisierung des Verbindungsgelenks benötigt. Denkbar ist jedoch auch, besonders einfache Kugelkäfige, welche den Kugelkäfigen eines Kugellagers ähneln, einzusetzen.

Vorzugsweise sind die Bereiche des Gelenkaußenteils 2, des Gelenkmittelteils 3 sowie des Gelenkinnenteils 4, in welchem die Kugelbahnen vorgesehen sind, nach dem Umformen vergütet worden. Hierdurch wird eine besondere Verschleißarmut und gleichzeitig die Gewährleistung einer Übertragung höherer Drehmomente ermöglicht. Um eine möglichst gleichmäßige Kraftübertragung bzw. Drehmomentübertragung zu erreichen, sind die Kugel 5a, 6a, 7a, 8a der Kugelbahnen 5, 6, 7, 8 auf einem gemeinsamen Radius 9 angeordnet.

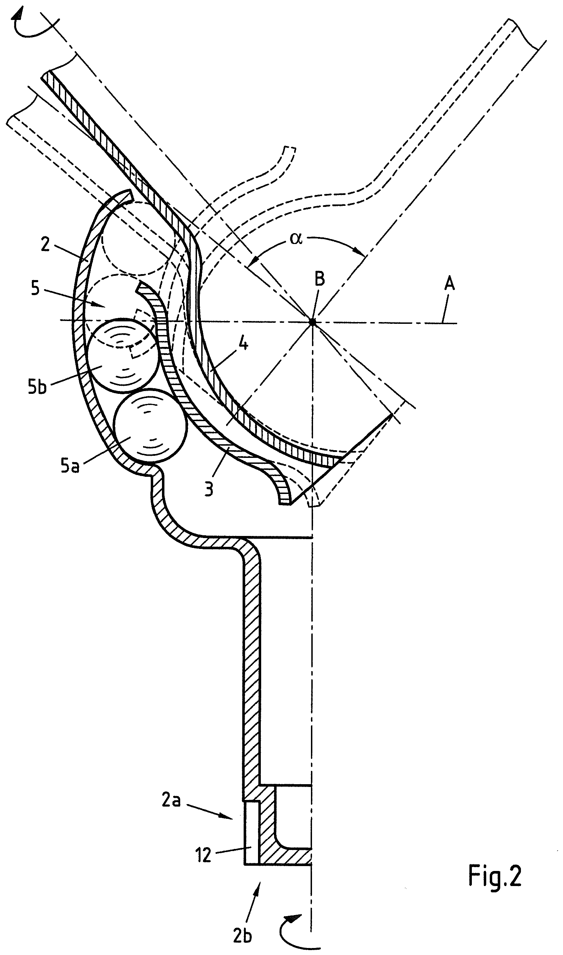

Fig. 2 zeigt in einer schematischen Schnittansicht entlang der Schnittachse II, dass in der Kugelbahn 5 zwei Kugeln 5a, 5b vorgesehen sind, welche zwischen dem Gelenkaußenteil 2 und dem Gelenkmittelteil 3 angeordnet sind. Das Gelenkmittelteil 3 ist um die aus der Zeichenebene herausstehende Schwenkachse B um mindestens 40° schwenkbar angeordnet, so dass der maximale Schwenkwinkel α mindestens 80° beträgt. Die Kugeln 5a und 5b verändern beim Schwenken des Gelenkmittelteils samt des Gelenkinnenteils um die Schwenkachse B ihre Position, wie in der Fig. 2 gestrichelt angedeutet ist.

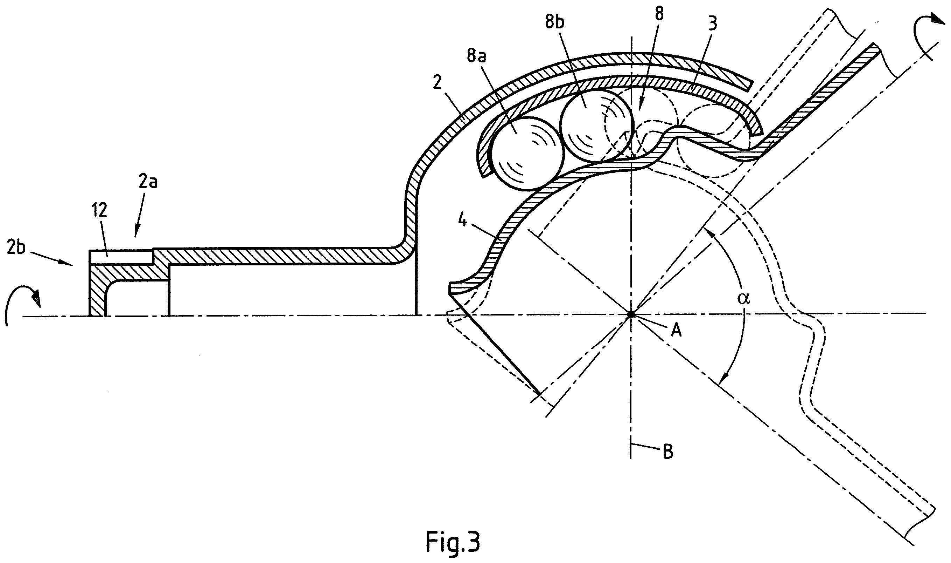

In der Fig. 3 ist nun eine schematische Schnittansicht des ersten Ausführungsbeispiels entlang der Schnittachse III dargestellt, wobei die Kugeln 8a, 8b zwischen dem Gelenkinnenteil 4 und dem Gelenkmittelteil 3 derart angeordnet sind, dass diese eine Kugelbahn 8, in welcher diese sich relativ zu dem Gelenkmittelteil bewegen können. Das Gelenkinnenteil 4 kann um die aus der Zeichenebene herausstehende Schwenkachse A um mindestens 40° verschwenkt werden, so dass der maximale Schwenkwinkel um die Schwenkachse A α mindestens 80° beträgt.

Weiter ist in Fig. 3 dargestellt, dass das in Richtung der ersten drehende Welle weisende Ende des Gelenkaußenteils 2a einen Gelenkzapfen 2b aufweist, welcher beispielsweise eine Verzahnung 12 aufweist, mit welcher dieser in Formschluss mit einem drehenden, angetriebenen Teil, beispielsweise einem Getriebe verbunden werden kann.

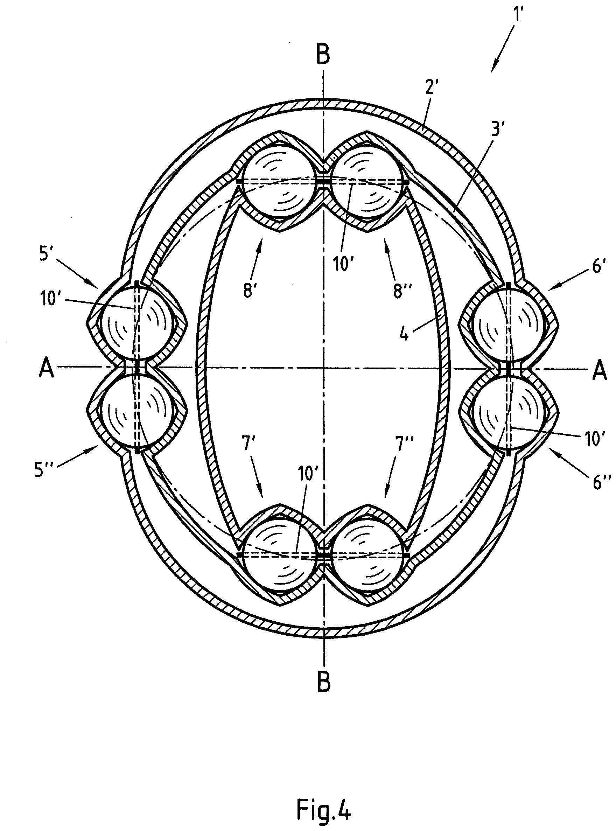

In Fig. 4 ist nun eine Radialschnittansicht eines zweiten Ausführungsbeispiels dargestellt, welches sich von dem ersten Ausführungsbeispiel in Fig. 1 dadurch unterscheidet, dass nunmehr anstelle einer einzigen Kugelbahn jeweils zwei parallele Kugelbahnen 5', 5", 6', 6", 7', 7", 8', 8" vorgesehen sind, um die Schwenkbewegungen um die Schwenkachsen A und B zu ermöglichen. Sie dienen darüber hinaus, wie bereits ausgeführt, zur Übertragung der Drehmomente von der ersten drehenden Welle über das Gelenkaußenteil 2', das Gelenkmittelteil 3' auf das Gelenkinnenteil 4' und somit auf die zweite drehende Welle. Mit dem Bezugszeichen 10' ist in Fig. 4 ein Kugelkäfig angedeutet, welcher beispielsweise zur Bereitstellung der Kugeln in den Kugelbahnen verwendet werden kann. Allerdings benötigt das vorliegende Ausführungsbeispiel sowohl in Fig. 1 als auch in Fig. 4 keinen Kugelkäfig.

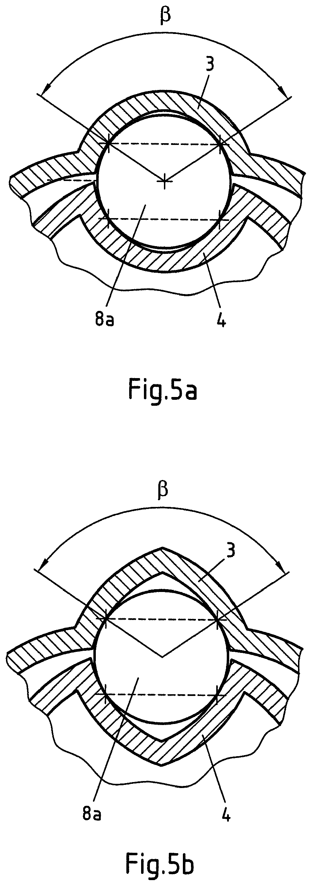

Verschiedene Ausführungen der Kugelbahnquerschnitte zeigen Fig. 5a) und Fig. 5b). Fig. 5a) ist beispielsweise die Kugel 8a des ersten Ausführungsbeispiels aus Fig. 1 dargestellt. Das Gelenkmittelteil 3 bildet dabei mit dem Gelenkinnenteil 4 eine Kugelbahn 8 mit elliptischem Querschnitt. Hierdurch wird die Kugel lediglich durch zwei, in der Schnittansicht zwischen den beiden Kreuzen dargestellten Kontaktlinien gestützt und weist insofern besonders geringe Reibungswerte auf. Gleiches kann durch eine Kugelbahn erreicht werden, welche einen Querschnitt mit der Form eines gespiegelten Spitzbogens aufweist, Fig. 5b). Hier werden ebenso lediglich zwei ringförmige Kontaktflächen bzw. Kontaktlinien ausgebildet, welche die Kugel führen. Hierdurch wird das Spiel der Kugeln in den Kugelbahnen verringert und gleichzeitig die Reibung der Kugeln in den Kugelbahnen möglichst gering gehalten.

Wie in Fig. 5a) und 5b) dargestellt ist, hat das Gelenkmittelteil 3 und das Gelenkinnenteil 4 in den Bereichen mit vergrößertem oder verringertem Außendurchmesser mit den in den jeweiligen Kugelbahnen angeordneten Kugeln, beispielsweise der Kugel 8a, einen Kontaktwinkel β von mehr als 45°. Dies gilt auch für das Gelenkaußenteil 2 und das Gelenkmittelteil 3 und die zugehörigen Kugeln 5a, 6a in den jeweiligen Kugelbahnen 5, 6, so dass die Kugeln besonders präzise in den Kugelbahnen geführt werden.

## Patentansprüche

1. Verbindungsgelenk (1) zur Übertragung einer Drehbewegung von einer ersten auf eine zweite drehenden Welle mit einem Gelenkaußenteil (2), einem Gelenkmittelteil (3) und einem Gelenkinnenteil (4), wobei das Gelenkaußenteil (2) mit der ersten drehenden Welle und das Gelenkinnenteil (4) mit der zweiten drehenden Welle zur Übertragung der Drehbewegung verbunden sind und Kugeln (5a,6a,7a,8a) in Kugelbahnen (5,6,7,8) vorgesehen sind, welche in den Kugelbahnen (5,6,7,8) ihre Position relativ zum Gelenkaußen-, Gelenkmittel- und Gelenkinnenteil (2,3,4) ändern können,
**dadurch gekennzeichnet, dass** das Gelenkaußenteil (2) über Kugeln (5a,6a) in mindestens einer ersten und einer zweiten Kugelbahn (5,6), welche zwischen Gelenkaußenteil (2) und Gelenkmittelteil (3) vorgesehen sind, gegenüber dem Gelenkmittelteil (3) um eine erste Schwenkachse (A) schwenkbar gelagert ist, das Gelenkinnenteil (4) gegenüber dem Gelenkmittelteil (3) über Kugeln (7a,8a) in einer dritten und vierten Kugelbahn (7,8), welche zwischen dem Gelenkinnenteil (4) und dem Gelenkmittelteil (3) vorgesehen sind, um eine zweite Schwenkachse (B) schwenkbar gelagert ist, die erste und zweite Schwenkachse (A,B) einen Winkel von 90° zueinander einnehmen und Kugeln (5a,6a,7a,8a) in den Kugelbahnen (5,6,7,8) vorgesehen sind, so dass die Drehbewegung über die Kugeln (5a,6a,7a,8a) der Kugelbahnen (5,6,7,8) vom Gelenkaußenteil (4) über das Gelenkmittelteil (3) auf das Gelenkinnenteil (4) und umgekehrt übertragbar ist.

2. Verbindungsgelenk nach Anspruch 1,
**dadurch gekennzeichnet, dass** je Kugelbahn (5,6,7,8) mindestens zwei Kugeln (5a,5b,8a,8b) vorgesehen sind.

3. Verbindungsgelenk nach Anspruch 1 oder 2,
**dadurch gekennzeichnet, dass** die Kugelbahnen (5,6,7,8) derart ausgebildet sind, dass das Gelenkaußenteil (2) und/oder das Gelenkinnenteil (4) um mindestens einen Winkel von 40° in jede Schwenkrichtung um die erste respektive um die zweite Schwenkachse (A,B) schwenkbar ist.

4. Verbindungsgelenk nach einem der Ansprüche 1 bis 3,
**dadurch gekennzeichnet, dass** die Kugeln (5a,6a,7a,8a) in den Kugelbahnen (5,6,7,8) auf einem gemeinsamen Radius (9) in einer Radialebene des Verbindungsgelenks (1) angeordnet sind.

5. Verbindungsgelenk nach einem der Ansprüche 1 bis 4,
**dadurch gekennzeichnet, dass** das Gelenkaußenteil (2) Bereiche mit erhöhtem Außendurchmesser und das Gelenkmittelteil (3) zugehörige Bereiche mit verringertem Außendurchmesser zur Aufnahme der Kugeln (5a,6a) der ersten und zweiten Kugelbahn (5,6) aufweisen und das Gelenkmittelteil (3) Bereiche mit erhöhtem Außendurchmesser und das Gelenkinnenteil (4) zugehörige Bereiche mit verringertem Außendurchmesser zur Aufnahme der Kugeln der dritten und vierten Kugelbahn (7,8) aufweisen.

6. Verbindungsgelenk nach Anspruch 5,
**dadurch gekennzeichnet, dass** das Gelenkaußenteil (2), das Gelenkmittelteil (3) und/oder das Gelenkinnenteil (4) in den Bereichen mit vergrößertem oder verringertem Außendurchmesser mit den in den jeweiligen Kugelbahnen (5,6,7,8) angeordneten Kugeln einen Kontaktwinkel von mehr als 45° aufweisen.

7. Verbindungsgelenk nach einem der Ansprüche 1 bis 6, **dadurch gekennzeichnet, dass** das Gelenkaußenteil (2), das Gelenkmittelteil (3) und/oder das Gelenkinnenteil (4) aus rotationssymmetrischen Ronden, Rohrabschnitten oder Fließpressrohlingen durch Umformen, vorzugsweise unter Anwendung eines Drückwalzens hergestellt ist.

8. Verbindungsgelenk nach Anspruch 7, **dadurch gekennzeichnet, dass** das Gelenkaußenteil (2), das Gelenkmittelteil (3) und/oder das Gelenkinnenteil (4) nach dem Umformen teilweise oder vollständig vergütet sind.

9. Verbindungsgelenk nach einem der Ansprüche 1 bis 8, **dadurch gekennzeichnet, dass** mindestens zwei der Kugelbahnen (5',5",6',6",7',7",8',8") als jeweils zwei parallel verlaufende Kugelbahnen ausgebildet sind.

10. Verbindungsgelenk nach einem der Ansprüche 1 bis 9, **dadurch gekennzeichnet, dass** an dem in Richtung der ersten drehenden Welle weisenden Ende des Gelenkaußenteils (2) und/oder an dem in Richtung der zweiten drehenden Welle weisenden Ende (2a) des Gelenkinnenteils (4) ein Gelenkzapfen (2b) vorgesehen ist, welcher optional Sicherungsmittel (12) zur Verbindung mit der ersten respektive der zweiten drehenden Welle aufweist.

## Claims

1. Connecting joint (1) for transmitting a rotation movement from a first to a second rotating shaft, having a joint outer part (2), a joint central part (3), and a joint inner part (4), wherein for transmitting the rotation movement the joint outer part (2) is connected to the first rotating shaft and the joint inner part (4) is connected to the second rotating shaft, and balls (5a, 6a, 7a, 8a) are provided in ball tracks (5, 6, 7, 8), which balls (5a, 6a, 7a, 8a) in the ball tracks (5, 6, 7, 8) may change their position in relation to the joint outer part, joint central part, and joint inner part (2, 3, 4), **characterized in that** the joint outer part (2), by way of balls (5a, 6a) in at least one first and one second ball track (5, 6) which are provided between the joint outer part (2) and the joint central part (3), is pivotably mounted about a first pivot axis (A) in relation to the joint central part (3), the joint inner part (4), by way of balls (7a, 8a) in a third and fourth ball track(7, 8) which are provided between the joint inner part (4) and the joint central part (3), is pivotably mounted about a second pivot axis (B) in relation to the joint central part (3), the first and second pivot axes (A, B) have an angle of 90° in relation to one another, and balls (5a, 6a, 7a, 8a) are provided in the ball tracks (5, 6, 7, 8), so that the rotation movement, by way of the balls (5a, 6a, 7a, 8a) of the ball tracks (5, 6, 7, 8), is transmittable from the joint outer part (4) via the joint central part (3) to the joint inner part (4) and vice versa.

2. Connecting joint according to claim 1, **characterized in that** at least two balls (5a, 5b, 8a, 8b) are provided per ball track (5, 6, 7, 8).

3. Connecting joint according to Claim 1 or 2, **characterized in that** the ball tracks (5, 6, 7, 8) are configured in such a manner that the joint outer part (2) and/or the joint inner part (4) are/is pivotable at least by an angle of 40° in each pivoting direction about the first and the second pivot axis (A, B), respectively.

4. Connecting joint according to one of Claims 1 to 3, **characterized in that** the balls (5a, 6a, 7a, 8a) in the ball tracks (5, 6, 7, 8) are disposed on a common radius (9) in a radial plane of the connecting joint (1).

5. Connecting joint according to one of Claims 1 to 4, **characterized in that** the joint outer part (2) has regions with an increased outer diameter and the joint central part (3) has associated regions with a decreased outer diameter for receiving the balls (5a, 6a) of the first and second ball tracks (5, 6), and the joint central part (3) has regions with an increased outer diameter and the joint inner part (4) has associated regions with a decreased outer diameter for receiving the balls of the third and fourth ball tracks (7, 8).

6. Connecting joint according to Claim 5, **characterized in that** the joint outer part (2), the joint central part (3), and/or the joint inner part (4) in the regions with the increased or decreased outer diameter have a contact angle of more than 45° in relation to the balls disposed in the respective ball tracks (5, 6, 7, 8).

7. Connecting joint according to one of Claims 1 to 6, **characterized in that** the joint outer part (2), the joint central part (3), and/or the joint inner part (4) are/is manufactured from rotationally symmetrical circular blanks, tube portions, or extrusion-press blanks by way of forming, preferably while applying roller spinning.

8. Connecting joint according to Claim 7, **characterized in that** the joint outer part (2), the joint central part (3), and/or the joint inner part (4) after forming are/is partially or completely heat treated.

9. Connecting joint according to one of Claims 1 to 8, **characterized in that** at least two of the ball tracks (5', 5", 6', 6", 7', 7", 8', 8") are in each case configured as two ball tracks which run parallel with one another.

10. Connecting joint according to one of Claims 1 to 9, **characterized in that** on the end of the joint outer part (2) which faces in the direction of the first rotating shaft, and/or on the end (2a) of the joint inner part (4) which faces in the direction of the second rotating shaft, a joint journal (2b) which optionally has securing means (12) for connecting to the first and the second rotating shaft, respectively, is provided.

## Revendications

1. Joint articulé (1) pour la transmission d'un mouvement de rotation d'un premier arbre tournant à un second arbre tournant avec une partie extérieure de joint (2), une partie moyenne de joint (3) et une partie intérieure de joint (4), dans lequel la partie extérieure de joint (2) est reliée au premier arbre tournant et la partie intérieure de joint (4) est reliée au second arbre tournant pour la transmission du mouvement de rotation et il est prévu des billes (5a, 6a, 7a, 8a) dans des pistes de billes (5, 6, 7, 8), qui peuvent changer de position dans les pistes de billes (5, 6, 7, 8) par rapport à la partie extérieure de joint, à la partie moyenne de joint et à la partie intérieure de joint (2, 3, 4),**caractérisé en ce que** la partie extérieure de joint (2) est supportée au moyen de billes (5a, 6a) dans au moins une première et une deuxième pistes de billes (5, 6), qui sont prévues entre la partie extérieure de joint (2) et la partie moyenne de joint (3), de façon pivotante autour d'un premier axe de pivotement (A) par rapport à la partie moyenne de joint (3), la partie intérieure de joint (4) est supportée au moyen de billes (7a, 8a) dans une troisième et une quatrième pistes de billes (7, 8), qui sont prévues entre la partie intérieure de joint (4) et la partie moyenne de joint (3), de façon pivotante autour d'un second axe de pivotement (B) par rapport à la partie moyenne de joint (3), le premier et le second axes de pivotement (A, B) forment entre eux un angle de 90° et il est prévu des billes (5a, 6a, 7a, 8a) dans les pistes de billes (5, 6, 7, 8), de telle manière que le mouvement de rotation puisse être transmis par les billes (5a, 6a, 7a, 8a) des pistes de billes (5, 6, 7, 8) de la partie extérieure de joint (4) via la partie moyenne de joint (3) à la partie intérieure de joint (4) et inversement.

2. Joint articulé selon la revendication 1, **caractérisé en ce qu'**il est prévu au moins deux billes (5a, 5b, 8a, 8b) par piste de billes (5, 6, 7, 8).

3. Joint articulé selon la revendication 1 ou 2, **caractérisé en ce que** les pistes de billes (5, 6, 7, 8) sont réalisées de telle manière que la partie extérieure de joint (2) et/ou la partie intérieure de joint (4) puisse pivoter au moins d'un angle de 40° dans chaque sens de pivotement autour du premier respectivement autour du second axe de pivotement (A, B).

4. Joint articulé selon l'une quelconque des revendications 1 à 3, **caractérisé en ce que** les billes (5a, 6a, 7a, 8a) sont disposées dans les pistes de billes (5, 6, 7, 8) sur un rayon commun (9) dans un plan radial du joint articulé (1).

5. Joint articulé selon l'une quelconque des revendications 1 à 4, **caractérisé en ce que** la partie extérieure de joint (2) présente des régions de diamètre extérieur accru et la partie moyenne de joint (3) présente des régions correspondantes de diamètre extérieur réduit destinées à recevoir les billes (5a, 6a) de la première et de la deuxième pistes de billes (5, 6) et la partie moyenne de joint (3) présente des régions de diamètre extérieur accru et la partie intérieure de joint (4) présente des régions correspondantes de diamètre extérieur réduit destinées à recevoir les billes de la troisième et de la quatrième pistes de billes (7, 8).

6. Joint articulé selon la revendication 5, **caractérisé en ce que** la partie extérieure de joint (2), la partie moyenne de joint (3) et/ou la partie intérieure de joint (4) présentent dans les régions de diamètre extérieur accru ou réduit un angle de contact de plus de 45° avec les billes disposées dans les pistes de billes respectives (5, 6, 7, 8).

7. Joint articulé selon l'une quelconque des revendications 1 à 6, **caractérisé en ce que** la partie extérieure de joint (2), la partie moyenne de joint (3) et/ou la partie intérieure de joint (4) est fabriquée à partir de ronds, de portions de tubes ou d'ébauches extrudées à symétrie de rotation, par déformation, de préférence en utilisant un rouleau de pression.

8. Joint articulé selon la revendication 7, **caractérisé en ce que** la partie extérieure de joint (2), la partie moyenne de joint (3) et/ou la partie intérieure de joint (4) est partiellement ou entièrement traitée après la déformation.

9. Joint articulé selon l'une quelconque des revendications 1 à 8, **caractérisé en ce qu'**au moins deux des pistes de billes (5', 5", 6', 6", 7', 7", 8', 8") sont formées par deux pistes de billes respectivement parallèles.

10. Joint articulé selon l'une quelconque des revendications 1 à 9, **caractérisé en ce qu'**il est prévu sur l'extrémité de la partie extérieure de joint (2) pointant dans la direction du premier arbre tournant et/ou sur l'extrémité (2a) de la partie intérieure de joint (4) pointant dans la direction du second arbre tournant un pivot (2b), qui présente en option des moyens de fixation (12) pour l'assemblage au premier respectivement au second arbre tournant.
